**Europäisches Patentamt**

**European Patent Office**

**Office européen des brevets**

(19)

(11) Numéro de publication: **0 144 274**
**B1**

(12) # FASCICULE DE BREVET EUROPEEN

(45) Date de publication du fascicule du brevet:
**01.06.88**

(21) Numéro de dépôt: **84402504.9**

(22) Date de dépôt: **05.12.84**

(51) Int. Cl.⁴: **A 23 L 1/23**, A 23 C 19/028,
A 23 C 19/032, A 23 C 19/086

(54) **Procédé de préparation de produits à saveur de fromage, et produits obtenus par ce procédé.**

(30) Priorité: **06.12.83 FR 8319502**

(43) Date de publication de la demande:
**12.06.85 Bulletin 85/24**

(45) Mention de la délivrance du brevet:
**01.06.88 Bulletin 88/22**

(84) Etats contractants désignés:
**AT BE CH DE FR GB IT LI LU NL SE**

(56) Documents cités:
**AU - A - 41 206**
**BE - A - 780 587**
**DE - A - 2 545 847**
**FR - A - 2 014 742**

**FOOD SCIENCE & TECHNOLOGY ABSTRACTS, no.**
**84-02-P0441 (84011217)**
**FOOD SCIENCE & TECHNOLOGY ABSTRACTS, no.**
**79-11-H1785 (79061493)**

(73) Titulaire: **Paillier, Jean-Claude, Bois de la Loge**
**Puyreaux, F-16230 Mansle (FR)**

(72) Inventeur: **Paillier, Jean-Claude, Bois de la Loge**
**Puyreaux, F-16230 Mansle (FR)**

(74) Mandataire: **Phélip, Bruno et al, c/o Cabinet Harlé &**
**Phélip 21, rue de la Rochefoucauld, F-75009 Paris (FR)**

## Description

L'invention appartient au domaine de l'industrie alimentaire, notamment de l'industrie fromagère. Elle vise plus particulièrement un procédé de préparation d'un produit à saveur de fromage à partir d'un concentré de lait de femelle laitière, le produit obtenue renfermant la totalité de la matière protéinique, du lactose et des sels minéreaux du lait de base.

Jusqu'à présent, le problème de la récupération de la totalités des matières protéiniques, du lactose et des sels minéraux dans les concentrés destinés à la fabrication des produits fromagers n'avait pas pu être résolu de manière satisfaisante. En effet, dans les différentes techniques antérieures, le taux de protéine que l'on pouvait retenir dans le fromage se situait suivant les régions et les saisons dans la plage de 30 à 35 g par litre de lait.

Dans la technique antérieure, on connaît, par le brevet australien 41 206/72, un procédé de fabrication de produits laitiers fermentés, du type quark qui est un genre de yaourt, les produits obtenus étant des liquides concentrés fermentés sans texture contenant les protéines du lait de départ avec en addition tout le lactose et tous les sels minéraux du lait de départ. Ce procédé met en œuvre une première étape de fermentation, dans laquelle du lait enrichi par de la poudre de lait, et soumis à fermentation à l'aide de bactéries thermophiles jusqu'à un pH de 4,9 environ, après quoi le produit intermédiaire obtenu et refroidi, homogénéisé, puis soumis à une fermentation complémentaire avec la même culture bactérienne, avec abaissement du pH (jusqu'à 4,7). Selon ce procédé connu, le lait est d'abord chauffé à 80 °C pendant au moins 30 minutes, ce qui entraîne une dénaturation importante des protéines. On notera également que les micro-organismes utilisés dans ce procédé ne sont pas capables de fermenter des matières premières ayant des extraits secs supérieurs à 38%.

En tout cas, le brevet Australien 41 206/72 n'enseigne pas un procédé permettant de fabriquer des produits similaires à de véritables fromages, mais contenant toute la matière sèche du lait, c'est-à-dire des produits ayant une texture, par un procédé dont les étapes essentielles sont: une première fermentation, une étape d'aromatisation ne modifiant pas sensiblement le pH obtenu à l'issue de la première étape, et enfin une étape finale de pasteurisation et/ou de stérilisation.

Le procédé de l'invention vise à obvier aux inconvénients précités en fournissant un procédé destiné à fabriquer des produits similaires à des fromages, dont les protéines sont d'abord soumises à l'état non dénaturé à l'action protéolytique d'une culture bactérienne, en choisissant cette dernière de manière à pouvoir opérer sur des matières premières laitières présentant des extraits secs supérieurs à 38%, ces résultats ne pouvant être atteints avec le procédé décrit et revendiqué dans le brevet australien précité.

Par ailleurs le brevet US 2 009 135 se rapporte à la fabrication d'un produit obtenu à partir de concentrats de lait, et dans lequel l'albumine et la caséine ne sont pas dénaturés par le procédé. De même le brevet US 1 711 032 décrit un procédé général de fabrication de fromage à partir d'un lait entier, aucun mode de réalisation préféré, pas plus que d'agent de fermentation particulier n'y étant indiqué. En outre, des procédés mettant en œuvre des techniques d'ultrafiltration, par exemple celle décrite dans le document DE-A-2 545 847, se traduisaient par une perte de lactose et de sels minéraux.

Un objet de la présente invention est d'obvier à tous les inconvénients des procédés de l'art antérieur et de permettre la préparation de produits à saveur de fromage à partir de concentrés de lait, renfermant la totalités des matières protéiniques, du lactose et des sels minéraux du lait de départ.

Un autre objet de l'invention est d'obtenir à volonté par régulation du pH de fermentation la préparation de pâte fondue ou bien de pâte lactique pasteurisée, stabilisée et ce avec des concentrés pouvant atteindre des concentrations de 50g ou davantage de protéines par litre de lait mis en œuvre.

Encore un autre objet de l'invention est de fournir un procédé permettant d'obtenir des produits à longue durée de conservation avec une augmentation de rendement.

La présente invention a donc pour objet un procédé de préparation d'un produit à saveur de fromage à partir d'un concentré de lait comprenant la totalité de la matière protéinique y compris l'albumine, du lactose et des sels minéraux du lait de base.

Selon le procédé de l'invention, on soumet le concentré de lait à une première étape de fermentation au moyen de bactéries thermophiles dans des conditions de température et pendant une période suffisante pour atteindre à la fin de la fermentation une plage de pH de 4,4 à 5,8, après quoi le concentré obtenu est refroidi, et soumis dans une seconde étape d'aromatisation, à l'action de bactéries mésophiles et/ou cryophiles pendant une période suffisante pour conférer audit produit les arômes convenables, et ce sans modifier sensiblement les conditions de pH du concentré obtenu après la première étape de fermentation, en obtenant ainsi un concentré à saveur de fromage que l'on soumet à une pasteurisation subséquente à température appropriée.

Le lait peut provenir de toute femelle laitière appartenant notamment aux bovins, ovins ou caprins. Le concentré de lait est avantageusement obtenu par élimination de l'eau contenue dans le lait de départ, de préférence par évaporation ou par toute technique connue analogue. Le concentré ainsi obtenu peut être homogénéisé ou non.

Selon un premier mode de réalisation de l'invention, on réalise la première étape de fermentation dans la plage de pH de 5 à 5,8. La pasteurisation ou stérilisation finale est effectuée entre 75 et 140 °C.

On obtient ainsi, par exemple une pâte fondue de chèvre, de demi-chèvre, de mélange de vache ou de brebis, présentant de 31 à 50% d'extrait sec et de 20 à 60% de gras sur sec. Cet extrait sec et ce taux de gras sur sec peuvent être modifiés soit par l'ajout de protéines de lait, animales ou végétales, par exemple de soja, en ce qui concerne l'extrait sec, soit, pour le gras sur sec, par l'ajout d'une matière grasse animale ou végétale, à condition que ladite matière puisse supporter les températures de pasteurisation, par exemple de l'huile de pépins de raisin ou de l'huile de maïs. Dans une forme de réalisation préférée, l'huile végétale peut avantageusement remplacer la totalité de la matière grasse animale dans les produits de l'invention.

Dans un second mode de réalisation destiné à obtenir une pâte lactique, pasteurisée et stérilisée, on réalise la première étape de fermentation dans la plage de pH de 4,4 à 5. La pasteurisation et la stérilisation peuvent alors être effectuées dans la plage de 80 à 120 °C.

On obtient ainsi, par exemple, un fromage blanc de chèvre, de demi-chèvre, de mélange de vache ou de brebis présentant un extrait sec total de 15 à 55% et un taux de gras sur sec de 0 à 70%. De même l'extrait sec et le taux de gras sur sec de cette pâte lactique de type fromage blanc peuvent être modifiés soit par l'adjonction de protéines de lait animal pour l'extrait sec, soit par l'ajout de matière grasse animale ou végétale et par exemple de l'huile de pépins de raisin pour le gras sur sec.

On notera que, dans ce second mode de réalisation, la plage de pH de 4,5 à 5 correspond aux normes pour pouvoir réaliser une pasteurisation entre 85 et 90 °C, ce qui se traduit par une précipitation du concentré fermentée sans exsudation de sérum lors du refoidissement. On obtient ainsi un fromage blanc, que l'on peut agrémenter ou non avec les différentes sortes d'arômes autorisées par la législation en vigueur. Ce fromage blanc est, de par son procédé d'obtention, stabilisé à longue conservation (environ 90 jours) avec une augmentation de rendement au moins égale à 50% les quantités initiales de lactose et de sels minéraux restant intégralement conservées dans les produits obtenus.

Le procédé de l'invention est d'une grande importance sur la régularité et la qualité des produits obtenus, du fait que l'on part toujours d'une matière première de base saine. Tel n'était pas jusqu'à présent le cas pour tous les fromages fondus où peuvent être introduits dans la pâte les chutes, les déclassés et les beurres plus ou moins oxydés.

La mise en œuvre du procédé de l'invention se traduit par une augmentation importante des rendements fromagers, qui peuvent aller jusqu'à 45% ou davantage, étant donné que toutes les matières premières du lait de base sont conservées, ce qui n'est pas le cas avec les procédés de l'art antérieur faisant intervenir les techniques d'ultrafiltration et autres.

Ainsi, les produits obtenus par le procédé de l'invention se caractérisent en ce qu'ils contiennent toutes les protéines du lait, y compris l'albumine, tous les sels minéraux du lait et du lactose ou des produits de transformation du lactose, tels que l'acide lactique, en quantité totale correspondant à la quantité de lactose contenue dans le lait de départ.

Le procédé de préparation de pâtes à saveur de fromage selon l'invention présente un avantage certain du fait que l'on peut atteindre 50 g de taux de protéine ou davantage par litre de lait mis en œuvre, alors que dans les procédés de l'art antérieur suivant les régions et les saisons le taux se situait entre 30 et 35 g par litre de lait. En outre le procédé selon la présente invention peut être mis en œuvre avec une économie de main-d'œuvre et de matériel. C'est ainsi qu'avec une cuve mécanisée de 6000 l, étanche et convenablement isolée, on obtient, par adjonction de concentré maturé, un taux de protéines au moins égal à 9000 litres de lait pour un temps de travail identique si-non plus court que dans les mises en œuvre actuelles, du fait que le caillé obtenu selon la présente invention contient beaucoup moins d'eau. Dans ces conditions, le rendement horaire de fabrication et de conditionnement peut atteindre 1 200 kg.

Le procédé selon l'invention permet également d'améliorer la qualité du produit, notamment par une meilleure aromatisation du concentré, du goût, de la texture de la pâte «onctueuse» et bien sûr grâce à sa consistance régulière.

Les produits fromagers selon l'invention peuvent être fabriqués de façon rapide et en continu avec un minimum de personnel, ce qui se traduit par un faible prix de revient, pour une valeur ajoutée très importante.

On notera que ce procédé peut être appliqué dans d'autres domaines de l'industrie laitière, par exemple pour obtenir des produits destinés à l'alimentation animale pour le développement de la flore intestinale etc. . .

L'invention s'étend également aux produits intermédiaires obtenus dans le procédé de l'invention. Leur structure physique dépend à la fois du pH, qui agit sur l'épaississement, et de la température. Selon les cas, de tels produits peuvent être utilisés dans la fabrication de pâte fondue ou de pâte lactique du type fromage blanc.

Comme spécifié ci-dessus, on utilise dans la première étape de fermentation des souches bactériennes thermophiles, dont le pH déterminera la consistance du concentré, et dans la seconde étape d'aromatisation des souches bactériennes mésophiles et/ou cryophiles qui confèrent un arôme au produit obtenu grace à la production de diacétyle et/ou d'acétaldéhyde produits par ces bactéries.

Les souches bactériennes thermophiles seront avantageusement choisies parmi les bactéries lactiques du type Streptococcus thermophilius, Lactobacillus helvéticus, Lactobacillus bulgaricus et les Lactobacilles filants, les mélanges appropriés de ces souches et leurs mutants.

La température adaptée à l'action de ces bactéries se situe dans la plage de 36 à 47 °C. Le temps de maturation du concentré dépend du type de bactéries utilisées, de la consistance de l'extrait sec du lait utilisé et de la température, mais ce temps est notablement plus court que dans les procédés de l'art antérieur et est, par exemple, de 16 heures. En ce qui concerne le mélange des souches bactériennes thermophiles, on notera que le Lactobacillus Helvéticus est protéolytique, ce qui se traduit par une modification de la matière azotée du concentrée et une diminution du pH. Par ailleurs, l'utilisation de lactobacilles filants évite une exsudation du sérum. L'énumération précitée de bactéries thermophiles n'est absolument pas critique.

Parmi les souches bactériennes mésophiles, on citera le Streptococcus lactis et parmi les souches bactériennes cryophiles, on fera avantageusement usage de Diacétylactis et d'Acétylactis. Cette énumération n'est nullement critique. Le caractère très fragile des bactéries cryophiles oblige à les mélanger avec des bactéries mésophiles. Ces bactéries sont bien connues pour le développement des arômes et ont pour fonction essentielle de développer lesdits arômes, et ce sans modifier sensiblement le pH du concentré. Lors de ces étapes de fermentation, et d'aromatisation, il est indispensable, afin d'éviter la contamination, d'opérer en cuve fermée sur un concentré pasteurisé. Il est à noter qu'en mettant en œuvre les 10 conditions opératoires précitées, le temps nécessaire pour la production totale du produit de transformation est inférieur à 40 heures au total, y compris les opérations de conditionnement.

Par comparaison avec les méthodes de la technique antérieure, le procédé selon l'invention permet, de façon surprenante, de fabriquer un fromage ayant d'excellentes qualités organoleptiques obtenu en partant d'un lait concentré dans lequel l'eau a été éliminée, par exemple par évaporation et permettant donc de conserver les teneurs du lait de départ en protéines, en lactose et en sels minéraux. Ce résultat inattendu est obtenu grâce à la combinaison, dans des conditions de réactions déterminées, de deux étapes de traitement, à savoir une première étape de fermentation à l'aide de bactéries thermophiles et une seconde étape d'aromatisation essentiellement destinée à développer l'arôme du fromage.

Le produit nouveau intermédiaire obtenu est une matière laitière consistant en un concentré maturé, aromatisé à saveur de fromage, et contenant toutes les protéines, tout le lactose et tous les sels minéraux du lait. Ce concentré est notamment utilisable pour la préparation de pâte fondue ou de pâte fraîche contenant également toutes les protéines, tout le lactose et tous les sels minéraux du lait. Il peut également être soumis à des traitements complémentaires, tels que l'addition d'adjuvants, par exemple des matières grasses animales ou végétales, et ce sans perdre son arôme. Le produit intermédiaire selon l'invention peut être déshydraté par tout procédé connu et transformé en un produit en particules solides, en particulier en poudre, qui peut être ultérieurement transformé en fromage par simple addition d'eau.

L'invention sera illustrée au moyen des exemples non limitatifs suivants.

Exemple 1

On opère sur un concentré de lait obtenu par évaporation d'eau selon une technique classique. Ce concentré est évaporé jusqu'à obtenir une teneur de gras sur sec de 30% et un extrait sec de 31%.

Après avoir placé ce concentré préalablement pasteurisé, dans un réacteur étanche d'une contenance de 6000 l, on ensemence au moyen d'un mélange de bactéries lactiques, à savoir le Streptococcus Thermophilus, le Lactobacillus Helvéticus et les Lactobacilles filants, et l'on poursuit une maturation de 6 heures à 40 °C. On constate une évolution du pH qui passe de 6,19 pour le mélange de concentré et des ferments précités à 5,23 au bout de 6 heures de maturation.

A ce stade, après avoir abaissé la température à 24 °C, on ajoute dans le récipient un mélange de souches bactériennes mésophiles, à savoir le Streptococcus lactis, et cryophiles, à savoir le Diacétylactis et l'Acétaldéhydelactis, du concentré maturé.

Après 10 heures de maturation en présence des bactéries mésophiles et cryophiles, auxquelles s'ajoutent les 6 heures de maturation avec des bactéries thermophiles, c'est-à-dire au total 16 heures, le pH du concentré maturé, est de 4,73.

On obtient ainsi un concentré maturé présentant un arôme exceptionnel une onctuosité au niveau de la pâte excellente et pratiquement pas de sérum, concentré que l'on soumet à une opération de pasteurisation dans la plage de 120 à 140 °C pour obtenir une pâte fondue.

Exemple 2

Comme dans l'exemple 1, on part d'un concentré de lait obtenu par évaporation, ce concentré présentant une teneur de gras sur sec de 25% et une teneur en extrait sec de 31%.

Egalement comme dans l'exemple 1, on réalise un ensemencement au moyen d'un mélange de Streptococcus thermophilus, Lactobacillus helvéticus et Lactobacilles filants, en utilisant le même appareillage pour réaliser une maturation de 6 heures à 40 °C.

Après les 6 heures de maturation, le pH du mélange de concentré et de ferments, qui atteignait 6,20, se situe alors à 5,21.

Comme dans l'exemple 1, on ajoute au concentré un mélange de souches bactériennes mésophiles et cryophiles, tout en abaissant la température du concentré à 24 °C.

Après 10 heures de maturation du concentré ainsi traité, auxquelles s'ajoutent les 6 heures de maturation en présence des ferments thermophiles, soit 16 heures au total, le pH du concentrés et de 4,70.

On obient un produit présentant un arôme excellent et une pâte onctueuse, produit que l'on soumet à la pasteurisation dans les mêmes conditions qu'à l'exemple 1.

Exemple 3

On opère à partir d'un concentré homogénéisé présentant une teneur de gras sur sec de 40% et un extrait sec de 39%. Ce concentré est soumis à l'ensemencement à partir d'un mélange des souches bactériennes thermophiles énumérées aux exemples précédents, sauf que l'on utilise les lactobacilles filants à plus faible dose, la maturation étant poursuivie pendant 6 heures à 40 °C.

Pour un pH de départ du mélange de concentré et de ferments égal à 6,8, on obtient après 6 heures de maturation un pH de 5,79.

Dans le second stade du procédé, à savoir l'aromatisation du produit, on ajoute au concentré obtenu à l'étape précédente un mélange de bactéries mésophiles et cryophiles, tels que spécifié dans les exemples précédents, en réduisant la température du concentré à 24 °C.

Après 10 heures de maturation du concentré ainsi traité, auxquelles s'ajoutent les 6 heures de maturation faisant intervenir les bactéries thermophiles, c'est-à-dire au total 16 heures, le pH est de 5,56.

On obtient un produit présentant un arôme supérieur à ceux des produits des exemples précédents, en ce qui concerne le dégagement de diacétyle. La pâte obtenue après pasteurisation est onctueuse mais légèrement moins épaisse que les produits obtenus dans les exemples précédents.

Exemple 4

On met en œuvre un concentré de lait non homogénéisé obtenu par évaporation d'eau, et présentant une teneur de gras sur sec de 45% et un extrait sec de 45%.

L'ensemencement est effectué de la même façon que dans l'exemple 3, c'est-à-dire avec du Streptococcus thermophilus et du Lactobacillus helvéticus et des Lactobacilles filants à moindre dose que dans les exemples 1 et 2, la maturation étant poursuivie pendant 6 heures à 40 °C.

Pour un pH du concentré et des ferments précités de 6,16, on obtient après 6 heures de maturation un pH de 5,80.

Dans le second stade du procédé, an ajoute comme dans les exemples précédents, un mélange de bactéries mésophiles et cryophiles en abaissant la température du concentré à 24 °C.

Après avoir subi 10 heures de maturation, qui s'ajoutent aux 6 heures de maturation l'aide de bactéries thermophiles, à savoir 16 heures au total, le pH du concentré maturé se maintient à 5,46.

On obtient un concentré présentant un arôme excellent, dont le dégagement de diacétyle est identique au concentré de l'exemple 3.

Après pasteurisation, on obtient une pâte onctueuse plus épaisse que celle de l'exemple 3.

Il est possible d'obtenir par le procédé de l'invention, de nouveaux types de fromages, notamment des fromages à pâte fondue présentant des moisissures en surface. De tels fromages sont originaux et présentent d'excellentes qualités organoleptiques.

**Revendications**

1. Procédé de préparation d'un produit à saveur de fromage à partir d'un concentré de lait ayant un extrait sec correspondant au produit final à obtenir, ledit concentré comprenant la totalité de la matière protéique, y compris l'albumine, du lactose et des sels minéraux du lait de base, caractérisé en ce que l'on soumet ce concentré à une première étape de fermentation au moyen de bactéries thermophiles dans des conditions de température et pendant une période suffisante pour atteindre à la fin de la fermentation un pH situé dans la plage de 4,4 à 5,8, après quoi le concentré obtenu est refroidi et soumis, dans une seconde étape d'aromatisation, à l'action de bactéries mésophiles et/ou cryophiles pendant une période suffisante pour obtenir les arômes convenables et ce sans modifier sensiblement les conditions de pH du concentré obtenu après la première étape de fermentation, en fournissant ainsi un concentré maturé que l'on soumet à une pasteurisation et/ou une stérilisation à la température appropriée.

2. Procédé selon la revendication 1, caractérisé en ce que l'on réalise la première étape de fermentation dans la plage de pH 5 à 5,8 de façon à obtenir un concentré maturé susceptible de fournir, après pasteurisation et/ou stérilisation dans la plage de 115 à 140 °C, une pâte fondue.

3. Procédé selon la revendication 1, caractérisé en ce que, pour obtenir une pâte lactique, pasteurisée et stérilisée, on réalise la première étape de fermentation dans la plage de pH 4,4 à 5, la pasteurisation et/ou stérilisation étant effectuée dans la plage de 80 à 120 °C.

4. Procédé selon la revendication 2 ou 3, caractérisé en ce que l'extrait sec de la pâte est modifié par l'ajout de protéines de lait, ou de protéines animales ou végétales, par exemple de soja.

5. Procédé selon la revendication 2 ou 3, caractérisé en ce que le taux de gras sur sec de la pâte est modifié par l'ajout d'une matière grasse animale et/ou d'une matière grasse végétale, capable de supporter les conditions de températures de l'opération de pasteurisation, par exemple de l'huile de pépins de raisin ou de maïs.

6. Procédé selon la revendication 5, caractérisé en ce que la matière grasse animale est remplacée entièrement par l'huile végétale.

7. Procédé selon l'une quelconque des revendications 1 à 6, caractérisé en ce que l'ensemencement dans la première étape de fermentation est réalisé à l'aide de bactéries thermophiles choisies dans le groupe constitué par le Streptococcus thermophilus, le Lactobacillus helvéticus, le Lactobacillus bulgaris, les Lactobacilles filants, les mélanges de ces souches ou de leurs mutants.

8. Procédé selon l'une quelconque des revendications 1 à 7, caractérisé par le fait que la seconde étape d'aromatisation, est réalisée à l'aide d'un mélange de bactéries cryophiles et mésophiles choisies dans le groupe constitué par le Streptococcus lactis, les Diacétylelactis et Acétaldéhyde lactis, et leurs mutants.

9. Procédé selon la revendication 2, caractérisé en ce que l'on part d'un concentré de lait présentant un pourcentage de gras sur sec de 20 à 60% pour un extrait sec de 31 à 50%.

10. Procédé selon la revendication 3, caractérisé en ce que l'on part d'un concentré de lait présentant un pourcentage de gras sur sec de 0 à 70% pour un extrait sec de 20 à 55%.

11. Procédé selon l'une quelconque des revendications 1 à 9, caractérisé en ce que la première étape d'aromatisation est réalisée à environ 40 °C pendant environ 6 heures, tandis que la seconde étape d'aromatisation est mise en œuvre pendant environ 10 heures à environ 24 °C.

12. A titre de produits industriels nouveaux, les produits à saveur de fromage obtenus par le procédé selon l'une quelconque des revendications 1 à 11.

13. A titre de produits intermédiaires, les concentrés maturés obtenus selon l'une quelconque des revendications 1 à 11.

14. A titre de produit nouveau, un concentré maturé selon la revendication 13, aromatisé à saveur de fromage, et contenant toutes les protéines, y compris l'albumine, tout le lactose et tous les sels minéraux du lait.

15. Fromage, notamment à pâte fondue ou à pâte fraîche, contenant toutes les protéines, y compris l'albumine, tout le lactose et tous les sels minéraux du lait, tel qu'il est obtenu à partir du concentré selon la revendication 14.

16. Concentré selon la revendication 14, caractérisé en ce qu'il contient toutes les protéines du lait, y compris l'albumine, tous les sels minéraux du lait et du lactose ou des produits de transformation du lactose, tels que l'acide lactique, en quantité totale correspondant à la quantité de lactose contenue dans le lait de départ.

17. Fromage selon la revendication 15, caractérisé en ce qu'il contient toutes les protéines du lait, y compris l'albumine, tous les sels minéraux du lait et du lactose ou des produits de transformation du lactose, tels que l'acide lactique, en quantité totale correspondant à la quantité de lactose contenue dans le lait de départ.

18. Concentrés ou fromages selon l'une quelconque des revendications 12 à 17, caractérisés en ce qu'ils sont sous forme déshydratée, en particulier de poudre.

## Patentansprüche

1. Verfahren zur Herstellung eines Produktes mit Käsegeschmack, ausgehend von einem Milchkonzentrat, das einen Trockenextrakt aufweist entsprechend dem zu erzielenden Endprodukt, wobei das genannte Konzentrat die Gesamtheit der Proteinsubstanz einschliesslich Albumin, Lactose und Mineralsalze der Ausgangsmilch enthält, dadurch gekennzeichnet, dass man dieses Konzentrat in einer ersten Stufe der Fermentierung mittels thermophiler Bakterien unter Temperaturbedingungen über einen Zeitraum unterwirft, der ausreicht, um am Ende der Fermentierung einen pH-Wert im Bereich von 4,4 bis 5,8 zu erhalten, wonach man das erhaltene Konzentrat kühlt und in einer zweiten Stufe der Aromatisierung unter Einwirkung von mesophilen und/oder kryophilen Bakterien über einen Zeitraum unterwirft, der ausreicht, um die passenden Aromen zu erhalten, ohne dabei die Bedingungen des pH-Wertes des nach der ersten Stufe der Fermentierung erhaltenen Konzentrats wesentlich zu ändern, wobei auf diese Weise ein gereiftes Konzentrat geliefert wird, das man einer Pasteurisierung und/oder Sterilisierung bei geeigneter Temperatur aussetzt.

2. Verfahren nach Anspruch 1, dadurch gekennzeichnet, dass man die erste Stufe der Fermentation im Bereich des pH-Wertes von 5 bis 5,8 durchführt, so dass man ein gereiftes Konzentrat erhält, welches geeignet ist, nach Pasteurisierung und/oder Sterilisierung im Bereich von 115 bis 140 °C eine Schmelzmasse zu liefern.

3. Verfahren nach Anspruch 1, dadurch gekennzeichnet dass man zur Erzielung einer milchigen, pasteurisierten und sterilisierten Masse die erste Stufe der Fermentation in dem pH-Bereich von 4,4 bis 5 durchführt, wobei die Pasteurisierung und/oder Sterilisierung im Bereich von 80 bis 120 °C erfolgt.

4. Verfahren nach Anspruch 2 oder 3, dadurch gekennzeichnet, dass der Trockenextrakt der Masse durch Zusatz von Milchproteinen oder von tierischen oder pflanzlichen Proteinen, z.B. Soja, modifiert wird.

5. Verfahren nach Anspruch 2 oder 3, dadurch gekennzeichnet, dass der Gehalt an Fett im Verhältnis zur Trockensubstanz der Masse durch Zusatz eines tierischen Fettes und/oder einer pflanzlichen Fettsubstanz modifiziert wird, die in der Lage ist, den Temperaturbedingungen während der Pasteurisierung zu widerstehen, z.B. Öl von Traubenkernen oder Mais.

6. Verfahren nach Anspruch 5, dadurch gekennzeichnet, dass die tierische Fettsubstanz vollständig durch Pflanzenöl ersetzt wird.

7. Verfahren nach irgendeinem der Ansprüche 1 bis 6, dadurch gekennzeichnet, dass das Beimpfen in der ersten Stufe der Fermentation mittels thermophiler Bakterien erfolgt, die aus der Gruppe der Streptococcus thermophilus, Lactobacillus helveticus, Lactobacillus bulgaris, der fadenziehenden Lactobazillen, Mischungen dieser Stämme und ihrer Mutanten ausgewählt werden.

8. Verfahren nach irgendeinem der Ansprüche 1 bis 7, dadurch gekennzeichnet, dass die zweite Stufe der Aromatisierung mittels eines Gemisches aus kryophilen und mesophilen Bakterien erfolgt, die aus der Gruppe der Streptococcus lactis, Diacetyllactis und Acetaldehyd lactis und ihrer Mutanten ausgewählt werden.

9. Verfahren nach Anspruch 2, dadurch gekennzeichnet, dass man von einem Milchkonzentrat ausgeht, das einen Fettanteil im Verhältnis zur Trockenmasse von 20 bis 60% bei einem Trockenextrakt von 31 bis 50% aufweist.

10. Verfahren nach Anspruch 3, dadurch gekennzeichnet, dass man von einem Milchkonzentrat ausgeht, das einen Fettanteil im Verhältnis zur Trockenmasse von 0 bis 70% bei einem Trockenextrakt von 20 bis 55% aufweist.

11. Verfahren nach irgend einem der Ansprüche 1 bis 9, dadurch gekennzeichnet, dass die erste Stufe der Aromatisierung bei ungefähr 40 °C etwa 6 Stunden lang durchgeführt wird, während die zweite Stufe der Aromatisierung ca. 10 Stunden bei etwa 24 °C erfolgt.

12. Als neue Industrieprodukte Produkte mit Käsegeschmack, welche durch ein Verfahren gemäss einem der Ansprüche 1 bis 11 erhalten worden sind.

13. Als Zwischenprodukte gereifte Konzentrate, die gemäss einem der Ansprüche 1 bis 11 erhalten worden sind.

14. Als neues Erzeugnis ein gereiftes Konzentrat gemäss Anspruch 13, das auf Käsegeschmack aromatisiert ist und alle Proteine, einschl. Albumin, die gesamte Lactose und alle Mineralsalze der Milch enthält.

15. Käse, insbesondere Weich- oder Frischkäse, der alle Proteine einschliesslich Albumin, die gesamte Lactose und alle Mineralsalze der Milch enthält, so wie man ihn, ausgehend vom Konzentrat gemäss Anspruch 14, erhält.

16. Konzentrat gemäss Anspruch 14, dadurch gekennzeichnet, dass alle Proteine der Milch einschliesslich Albumin, alle Mineralsalze der Milch und der Lactose oder Lactoseübergangsprodukte wie Milchsäure in der gesamten Menge enthalten sind, die der in der Ausgangsmilch enthaltenen Lactose entspricht.

17. Käse gemäss Anspruch 15, dadurch gekennzeichnet, dass alle Proteine der Milch einschliesslich Albumin, alle Mineralsalze der Milch und der Lactose oder Lactoseübergangsprodukte wie Milchsäure in der gesamten Menge enthalten sind, die der in der Ausgangsmilch enthaltenen Lactose entspricht.

18. Käsekonzentrate gemäss einem der Ansprüche 12 bis 14, dadurch gekennzeichnet, dass sie in entwässerter Form, insbesondere als Pulver vorliegen.

**Claims**

1. Process for preparing a product tasting of cheese from a milk concentrate having a dry matter content corresponding to the final product to be obtained, the said concentrate comprising the total content of the protein including the albumin, of the lactose and of the mineral salts in the original milk, characterized in that this concentrate is subjected to a first stage of fermentation by means of thermophilic bacteria under temperature conditions and for a sufficient period for attaining a pH falling within the range from 4.4 to 5.8 at the end of the fermentation, after which the concentrate obtained is cooled and subjected, in a second, flavouring stage, to the action of mesophilic and/or cryophilic bacteria for a sufficient period for obtaining the appropriate flavours, this being achieved without substantially modifying the pH conditions of the concentrate obtained after the first fermentation stage, thereby yielding a ripened concentrate which is subjected to a pasteurization and/or a sterilization at the appropriate temperature.

2. Process according to Claim 1, characterized in that the first fermentation stage is carried out in the pH range 5 to 5.8, so as to obtain a ripened concentrate capable of yielding, after pasteurization and/or sterilization in the range from 115 to 140 °C, a soft mass.

3. Process according to Claim 1, characterized in that, to obtain a pasteurized and sterilized lactic mass, the first, fermentation stage is carried out in the pH range 4.4 to 5, the pasteurization and/or sterilization being performed in the range from 80 to 120 °C.

4. Process according to Claim 2 or 3, characterized in that the dry matter content of the mass is modified by adding milk proteins, or animal or vegetable proteins, for example of soybean.

5. Process according to Claim 2 or 3, characterized in that the fat content in the dry matter of the mass is modified by adding an animal fat and/or a vegetable fat capable of withstanding the temperature conditions of the pasteurization operation, for example grape pip oil or maize oil.

6. Process according to Claim 5, characterized in that the animal fat is replaced entirely by vegetable oil.

7. Process according to any one of Claims 1 to 6, characterized in that the seeding in the first, fermentation stage is carried out using thermophilic bacteria chosen from the group consisting of Streptococcus thermophilus, Lactobacillus helveticus, Lactobacillus bulgaris, chain-forming lactobacilli, the mixtures of these strains or the mutants thereof.

8. Process according to any of Claims 1 to 7, characterized in that the second flavouring stage is carried out using a mixture of cryophilic and mesophilic bacteria chosen from the group consisting of Streptococcus lactis, Diacetylactis and Acetaldehyde Lactis and the mutants thereof.

9. Process according to Claim 2, characterized in that the starting material is a milk concentrate having a percentage of fat in the dry matter of 20 to 60% for a dry matter content of 31 to 50%.

10. Process according to Claim 3, characterized in that the starting material is a milk concentrate having a percentage of fat in the dry matter of 0 to 70% for a dry matter content of 20 to 55%.

11. Process according to any one of Claims 1 to 9, characterized in that the first flavouring stage is carried out at approximately 40 °C for approximately 6 hours, while the second flavouring stage is carried out for approximately 10 hours at approximately 24 °C.

12. By way of new industrial products, the products tasting of cheese obtained by the process according to any one of Claims 1 to 11.

13. By way of intermediate products, the ripened concentrates obtained according to any one of Claims 1 to 11.

14. By way of a new product, a ripened concentrate according to Claim 13, flavoured with the taste of cheese and containing all the proteins including the albumin, all the lactose and all the mineral salts of the milk.

15 Cheese, in particular soft cheese or fresh cheese, containing all the proteins including the albumin, all the lactose and all the mineral salts of the milk, as is obtained from the concentrate according to Claim 14.

16. Concentrate according to Claim 14, characterized in that it contains all the proteins of the milk including the albumin, all the mineral salts of the milk and lactose or lactose conversion products, such as lactic acid, in a total quantity corresponding to the quantity of lactose present in the original milk.

17. Cheese according to Claim 15, characterized in that it contains all the proteins of the milk including the albumin, all the mineral salts of the milk and lactose or lactose conversion products, such as lactic acid, in a total quantity corresponding to the quantity of lactose present in the original milk.

18. Concentrates or cheeses according to any one of Claims 12 to 17, characterized in that they are in dehydrated form, especially in powder form.